# EUROPEAN PATENT SPECIFICATION

(11) **EP 4 066 979 B1**
(45) Date of publication and mention of the grant of the patent: **09.10.2024**
(21) Application number: 21754231.5
(22) Date of filing: 25.01.2021
(51) Int. Cl.: B23K 11/14, B23K 11/30, B23K 11/00

(54) **MAGNET-EQUIPPED PROJECTION WELDING ELECTRODE**
MAGNETBESTÜCKTE BUCKELSCHWEISSELEKTRODE
ÉLECTRODE DE SOUDAGE PAR BOSSAGE ÉQUIPÉE D'UN AIMANT

(30) Priority: 13.02.2020 JP 2020037280
(43) Date of publication of application: 05.10.2022
(73) Proprietor: Aoyama, Shoji, Sakai-shi, Osaka 590-0116 (JP)
(72) Inventor: AOYAMA, Yoshitaka, Sakai-shi, Osaka 590-0114 (JP); AOYAMA Shoji, Sakai-shi, Osaka 590-0116 (JP)
(74) Representative: Grünecker Patent- und Rechtsanwälte PartG mbB
(86) International application number: PCT/JP2021/002507
(87) International publication number: WO 2021/161771

(56) References cited:
- WO-A1-2004/009280
- JP-A- 2012 020 335
- JP-A- 2013 230 498
- JP-A- 2013 230 498
- JP-A- H06 170 554
- US-A1- 2018 036 829

## Description

The present invention relates to a water-cooled projection welding electrode in which a permanent magnet is incorporated.

### BACKGROUND ART

In a factory where automotive sheet metal is welded, or other facilities, water supply pump equipment for cleaning or cooling is installed, and shower cleaning, impurity discharge cleaning, and the like are performed by using water distributed to each target place. When the supplied water is used for such applications, a sufficient amount of supplied water can be secured by supplying water at high pressure to the water supply pipe having a large flow passage area.

However, in a process of welding a stud bolt to a steel plate part having a thickness of about 0.7 mm by electrical resistance welding, when the water-cooled electrode is employed, it is necessary to take countermeasures in terms of cooling water supply. That is, since the water supplied from the water supply pump equipment reaches the electrode through a narrow and complicatedly bent water passage, a shortage of the water pressure and the flow rate of the cooling water to the electrode occurs, the electrode becomes abnormally high temperature, and the non-metallic part inside the electrode may be damaged by overheating.

As water-cooled electrodes, those described in WO 2004/009280 A and JP 2012-020335 A are known. In these water-cooled electrodes, a heat insulating guide sleeve made of an insulation material is inserted into a main body having a cylindrical shape and made of metal, a cooling water passage is provided between the main body and the heat insulating guide sleeve, and a permanent magnet is disposed in the heat insulating guide sleeve.

### CITATIONS LIST

### PATENT LITERATURE

Patent Literature 1: WO 2004/009280 A
Patent Literature 2: JP 2012-020335 A
Patent Literature 3 : JP 2013-230498 A, describing the preamble of claim 1

### SUMMARY OF INVENTION

### TECHNICAL PROBLEMS

In the water-cooled electrode described in the above patent literature, a permanent magnet is disposed in a central portion of the main body having a cylindrical shape, a heat insulating guide sleeve on an outer peripheral side of the permanent magnet has a thin wall, and a cooling water passage on an outer side of the heat insulating guide sleeve has a large sectional area.

As described above, when the sectional area and the volume of the cooling water passage increase, the water pressure and the flow rate of the cooling water distributed from the water supply pump equipment are insufficient in many cases. Therefore, the cooling water having entered from the inlet of the electrode passes through the central portion of the cooling water passage in a laminar flow state without passing through the entire region of the cooling water passage, and flows out from the outlet. For this reason, there is a problem that a stagnant portion where the cooling water is still or does not pass is formed in the cooling water passage, and thus the high-temperature main body cannot be sufficiently cooled.

Since the wall thickness of the heat insulating guide sleeve surrounding the permanent magnet is thin, there is another problem that the amount of heat transferred to the permanent magnet increases, a phenomenon of temperature demagnetization occurs in the permanent magnet, leading to a decrease in the part attractive force of the permanent magnet.

The present invention is made to solve the above problems, and an object of the present invention is to resolve problems such as insufficient cooling and abnormal overheating of a permanent magnet by improving an electrode, even when a decrease in pressure or a decrease in flow rate occurs in water supplied from water supply pump equipment.

### SOLUTIONS TO PROBLEMS

According to an aspect of the present invention, there is provided a magnet-equipped projection welding electrode as defined in claim 1, the electrode including:
a main body made of metal and having a cylindrical shape;
an end cover made of metal, the end cover attached to an end of the main body, the end cover having a through hole into which a part is inserted;
a heat insulating guide sleeve made of an insulation material, the heat insulating guide sleeve being inserted into the main body and having a minor diameter hole and a major diameter hole, the minor diameter hole communicating with the through hole of the end cover, the major diameter hole having a diameter larger than a diameter of the minor diameter hole;
a cooling water passage formed in an outer peripheral portion of the heat insulating guide sleeve or an inner peripheral portion of the main body, the cooling water passage having an annular shape and disposed in a circumferential direction of the main body;
an inlet and an outlet formed in the main body, the inlet configured to supply cooling water to the cooling water passage, the outlet configured to discharge the cooling water from the cooling water passage;
a heat insulating portion being a portion of the heat insulating guide sleeve that is located at an inner side of the electrode;
a container slidably inserted into the major diameter hole located on an inner side of the heat insulating portion, the container containing a permanent magnet; and
a magnetic force transmission member extending from the container, the magnetic force transmission member slidably inserted into the minor diameter hole,
in which the permanent magnet, the heat insulating portion of the heat insulating guide sleeve, and the cooling water passage are disposed in a positional relationship in which the permanent magnet, the heat insulating portion of the heat insulating guide tube, and the cooling water passage are arranged in a diameter direction of the main body, and
a depth dimension of the cooling water passage as viewed in the diameter direction of the main body is set to be smaller than a thickness dimension of the heat insulating portion. A further preferred embodiment of the present invention is defined in the dependent claim 2.

### ADVANTAGEOUS EFFECTS OF INVENTION

The melting heat generated by flowing the welding current is mainly transferred from the end cover made of metal to the main body made of metal. This melting heat is cooled by the cooling water flowing through the cooling water passage. In addition, the permanent magnet, the heat insulating portion of the heat insulating guide sleeve, and the cooling water passage are arranged in the diameter direction of the main body, and the depth dimension of the cooling water passage as viewed in the diameter direction of the main body is set to be smaller than the thickness dimension of the heat insulating portion. Therefore, the thickness dimension of the heat insulating portion can be increased as much as possible to reduce heat transfer from the heated cooling water to the permanent magnet, whereby abnormally high temperature of the permanent magnet can be prevented.

Furthermore, the depth dimension of the cooling water passage can be made as small as possible. Thus, the water flow of the cooling water having entered from the inlet reliably collide with the outer peripheral face of the heat insulating guide sleeve to diffuse, and flows in the circumferential direction in the state of a turbulent flow ranging over the entire region of the cooling water passage to flow out to the outlet. Therefore, since the cooling water circulates while being in contact with the main-body side inner face of the cooling water passage in a state of turbulent flow, the melting heat can be effectively taken away from the main-body side inner face of the cooling water passage and the high cooling efficiency can be maintained.

In particular, there may be a case where a flow-rate or water-pressure shortage occurs at the supply destination in the distribution of the cooling water to each section of the factory as described above. Even in such a case, since the depth dimension of the cooling water passage as viewed in the diameter direction of the main body is set to be smaller than the thickness dimension of the heat insulating portion, the cooling water having entered the cooling water passage from the inlet immediately collides with the cylindrical face of the heat insulating portion to diffuse before the flow force decreases. Then, the diffused cooling water forms a turbulent flow such as a small vortex flow ranging over the entire region of the cooling water passage, so that the melting heat can be effectively taken away from the inner face of the main body. That is, even if a factory has a risk of a shortage of water distribution, insufficient cooling of the electrode is resolved by setting the depth dimension of the cooling water passage as described above.

Since the depth dimension of the cooling water passage as viewed in the diameter direction of the main body is set to be smaller than the thickness dimension of the heat insulating portion, the thickness of the heat insulating portion can be increased. Accordingly, the heat transfer from the high-temperature cooling water to the permanent magnet is blocked by the thick heat insulating portion, whereby the degree of heating of the permanent magnet is moderated. As a result, the problem that the temperature demagnetization occurs in the permanent magnet and the attractive force to a part decreases is resolved. When the permanent magnet is heated to an abnormally high temperature, irreversible demagnetization in which a decrease in magnetic force is not recovered even when the temperature returns to ordinary temperature, or in a significant case, the permanent magnet reaches the Curie temperature and is brought into a demagnetized state. However, abnormal heating of the permanent magnet is prevented by the heat insulating action of the heat insulating portion, which is effective for improving the durability of the permanent magnet. It is considered that when the permanent magnet reaches the Curie temperature, heat from the main body is transferred to the permanent magnet without passing through the cooling water passage.

In other words, the cooling water forms a turbulent flow and actively cools the main body, and accordingly, the cooling water shifts to a high-temperature state and the heat flow to the permanent magnet increases. However, since the thickness of the heat insulating portion can be set to be large, abnormal heating of the permanent magnet is prevented.

Since the magnetic force transmission member extending from the container is slidably inserted into the minor diameter hole, the attractive force to a part decreases on the way in which the lines of magnetic force of the permanent magnet pass through the magnetic force transmission member. If, before such a decrease in attractive force, the attractive force is decreased due to the temperature demagnetization phenomenon, the attraction holding force to a part is significantly decreased. In the invention of the present application, since heating of the permanent magnet is suppressed by the heat insulating portion, there is no concern about the attraction holding force as described above.

Due to the cooling phenomenon as described above, an abnormally high temperature of the permanent magnet can also be prevented. Usually, various magnets such as a ferrite magnet, a neodymium magnet, a samarium-cobalt magnet, and an alnico magnet are employed as the permanent magnet, but a magnet with less thermal demagnetization is desirably used. Even in the case of a permanent magnet having an attractive force of 100% at an outside air temperature of 20°C, the attractive force reduction varies depending on the type of magnet. When the permanent magnet is heated by melting heat to 50°C, the attractive force is reduced by 10%, and when the permanent magnet is heated to 100°C, the attractive force is reduced by 20%. Such temperature demagnetization occurring in the permanent magnet itself greatly affects the attraction holding force to a part because the attractive force attenuation on the way of the transmission of the attractive force in the magnetic force transmission member is taken into consideration. In an extreme case, there is a concern about a problem of fall of a part. In the invention of the present application, abnormal overheating of the permanent magnet is suppressed, and thus the above problem is resolved.

The invention of the present application is an invention of the electrode as described above, but as is apparent from an embodiment described below, the invention of the present application also has an aspect as an invention of method in which a flow behavior of cooling water, a heat flow, and the like are specified.

### BRIEF DESCRIPTION OF DRAWINGS

FIG. 1 is a sectional view of an entire electrode.
FIG. 2 is a sectional view taken along line (2)-(2) of FIG. 1.
FIG. 3A is a sectional view of parts such as a permanent magnet, a heat insulating portion, and a cooling water passage.
FIG. 3B is a sectional view of parts such as the permanent magnet, the heat insulating portion, and the cooling water passage.
FIG. 4A1 is a view illustrating good behavior of a cooling water flow.

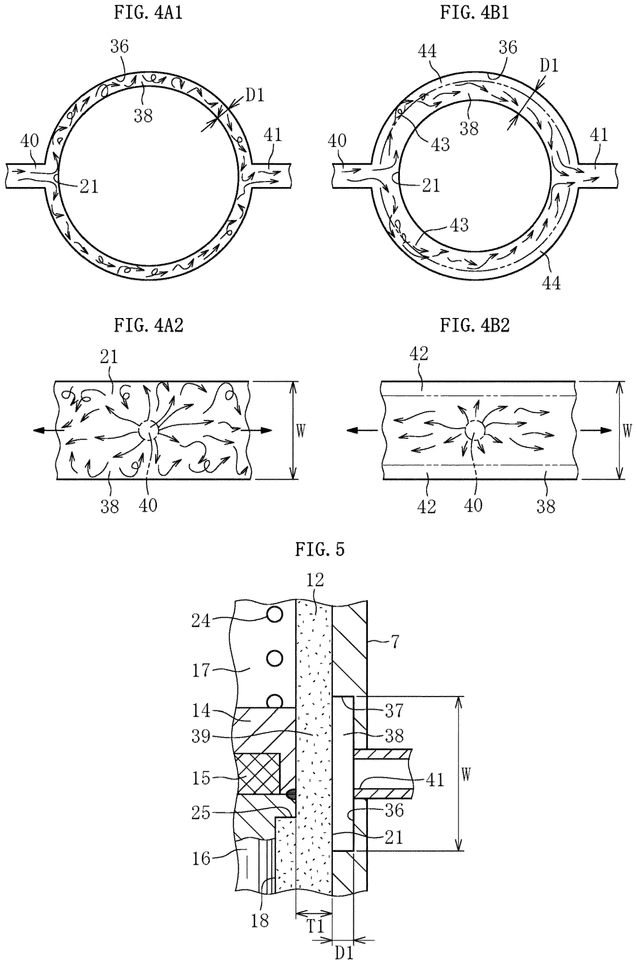

FIG. 4A2 is a view illustrating good behavior of a cooling water flow.
FIG. 4B1 is a view illustrating unfavorable behavior of a cooling water flow.
FIG. 4B2 is a view illustrating unfavorable behavior of a cooling water flow.
FIG. 5 is a sectional view illustrating a modification.

### DESCRIPTION OF EMBODIMENT

Next, an embodiment of a magnet-equipped projection welding electrode according to the present invention will be described.

### EMBODIMENT

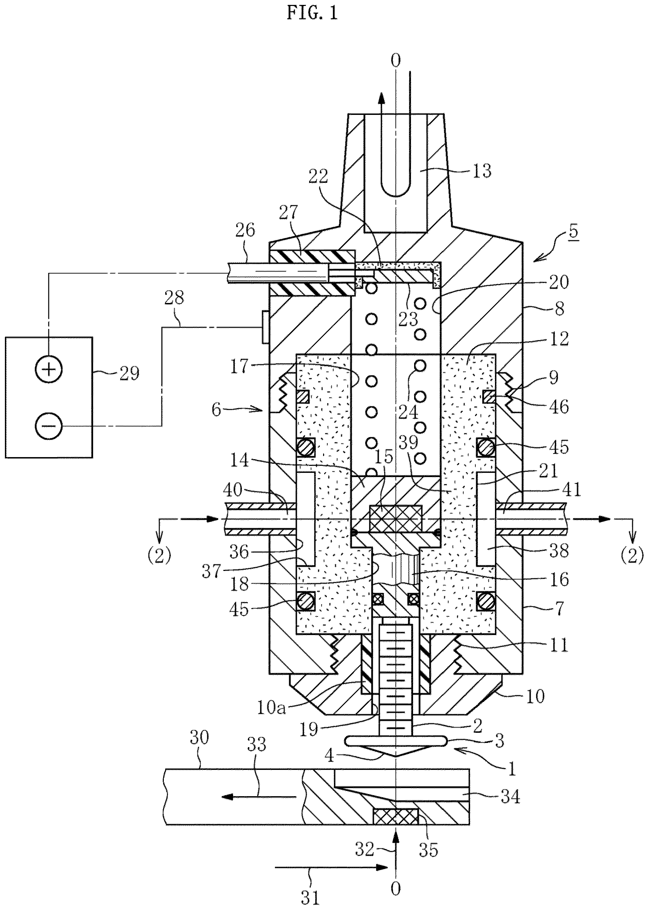

FIG. 1 to FIG. 5 illustrate an embodiment of the present invention.

First, parts used in the electrode according to the invention of the present application will be described.

There are various parts such as a flanged shaft-like member and a rod-like part. Here, a projection bolt 1 made of iron is employed as the above part. The projection bolt 1 includes a stem 2 threaded externally, a flange 3 having a circular shape and disposed coaxially with the stem 2, and a welding projection 4 having a conical shape and provided at a central portion of the flange 3.

Hereinafter, in the present description, the projection bolt may be simply referred to as a bolt.

Next, the main body of the electrode will be described.

An entire electrode is denoted by reference numeral 5. A main body 6 of the electrode is made of metal and formed into a cylindrical shape, and a welding-side member 7 made of copper-chromium alloy and a fixed-side member 8 also made of copper-chromium alloy are joined together via a threaded portion 9. An end cover 10 made of beryllium copper is detachably and attachably joined to the front end of the welding-side member 7 by a threaded portion 11. Reference numeral 10a denotes an insulation sleeve fitted into the through hole 19 of the end cover 10. A cooling hole 13 is provided at the end of the fixed-side member 8.

The electrode 5 may be either a movable electrode or a fixed electrode, but is a movable electrode here. In addition, illustration of a counterpart fixed electrode on which a steel plate part is placed is omitted.

Next, a heat insulating guide sleeve will be described.

A heat insulating guide sleeve 12 having a cylindrical shape is inserted into the main body 6 having a circular section. The heat insulating guide sleeve 12 is made of an insulation material such as Bakelite, polyamide resin, or polytetrafluoroethylene (PTFE). In the heat insulating guide sleeve 12, a minor diameter hole 18 communicating with the through hole 19 of the end cover 10 and a major diameter hole 17 having a diameter larger than that of the minor diameter hole 18 communicate with each other.

A container 14 for containing a permanent magnet 15 is slidably inserted into the major diameter hole 17. The container 14 is made of stainless steel that is a non-magnetic material. A magnetic force transmission member 16 made of iron and welded to the container 14 is slidably inserted into the minor diameter hole 18. The magnetic force transmission member 16 is a rod-like member having a circular section, is in close contact with the permanent magnet 15, and attracts an end of the stem 2 inserted into the through hole 19. The inner diameter of the through hole 19 is identical to the inner diameter of the insulation sleeve 10a, and a slight gap is formed between the through hole 19 and the stem 2.

Next, an energization structure will be described.

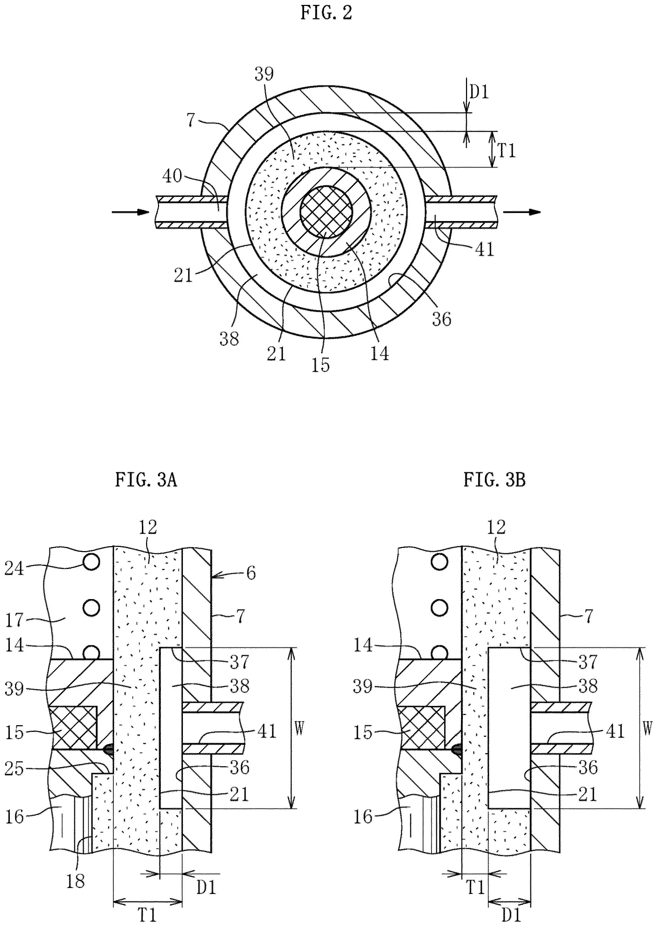

A receiving hole 20 communicating with the major diameter hole 17 of the heat insulating guide sleeve 12 is formed in the fixed-side member 8, an insulation sheet 22 having a circular shape and formed of an insulation material is contained in an inner bottom portion of the receiving hole 20, and a conductive washer 23 is fitted inside of the insulation sheet 22. A compression coil spring 24 is interposed between the conductive washer 23 and the container 14, and the tension of the compression coil spring 24 is received by an inner end face 25 of the major diameter hole 17 illustrated in FIG. 3A via the container 14.

The conductive wire 26 is connected to the conductive washer 23, and is guided to the outside through the inside of an insulation tube 27. Another conductive wire 28 is connected to the fixed-side member 8 that is the main body 6. These conductive wires 26 and 28 are connected to a detector 29.

Next, bolt supply means will be described.

In order to insert the stem 2 of the bolt 1 into the through hole 19 and cause the stem 2 to reach the magnetic force transmission member 16, the bolt 1 may be manually inserted by an operator, but here, a supply rod 30 made of stainless steel is illustrated. The supply rod 30 is caused to perform a square motion as indicated by arrows 31, 32, and 33. A recess 34 that is open on the front-end side is formed at the front end of the supply rod 30, in which the flange 3 is received. A permanent magnet 35 is embedded to stabilize holding of the bolt 1 in a standing state.

Next, a cooling water passage will be described.

A cooling water passage 38 is provided in a form in which an annular groove 37 that is shallow in the circumferential direction is formed in the outer peripheral portion of the heat insulating guide sleeve 12. The annular groove 37 is provided close to the heat source, that is, the end cover 10 as viewed in a central axial line O-O direction. That is, the annular groove 37 is formed at a position close to the end cover 10 side from the center of the axial length of the heat insulating guide sleeve 12.

A portion of the heat insulating guide sleeve 12 located at an inner side (the central axial line O-O side) of the cooling water passage 38 serves as a heat insulating portion 39. The above-described container 14 is slidably inserted inside the heat insulating portion 39. Therefore, the permanent magnet 15, the heat insulating portion 39, and the cooling water passage 38 have a positional relationship of being arranged as viewed in the diameter direction of the main body 6.

The cooling water passage 38 is provided with an inlet 40 and an outlet 41 for supplying and discharging cooling water. As is apparent from FIG. 2, the water conduit is coupled to the welding-side member 7 to form the inlet 40 and the outlet 41. Both the inlet 40 and the outlet 41 are aligned on the diameter line and open at the central position of a width W of the cooling water passage 38 as viewed in the central axial line O-O direction.

As illustrated in FIG. 3A, a depth dimension D1 of the cooling water passage 38 as viewed in the diameter direction of the main body 6 is set to be smaller than a thickness dimension T1 of the heat insulating portion 39. In this embodiment, D1 = 1.8 mm, and T1 = 2.6 mm. The width W of the cooling water passage 38 as viewed in the central axial line O-O direction is 16 mm. The inner diameter of the inlet 40 and the outlet 41 is 3.5 mm.

The flow behavior of the cooling water will be described.

FIG. 4A1 and FIG. 4A2 illustrate good behavior of the cooling water flow obtained by the invention of the present application. The water flow of the cooling water having entered from the inlet 40 collides with the outer peripheral face 21 of the heat insulating guide sleeve 12 before the water force thereof decreases, to diffuse in the circumferential direction and the central axial line O-O direction. The diffused cooling water flows in the circumferential direction in a state of a turbulent flow ranging over the entire region of the depth D1 and the width W of the cooling water passage 38 to flow out to the outlet 41. Therefore, since the cooling water circulates while being in contact with the main-body side inner face 36 of the cooling water passage 38 in a state of turbulent flow, the melting heat can be effectively taken away from the main-body side inner face 36, which maintains the high cooling efficiency.

The above-described good flow behavior is ensured by the configuration illustrated in FIG. 3A.

In order to vigorously collide with an outer peripheral face 21 before the water force of the cooling water from the inlet 40 decreases, the ratio of the depth dimension D1 of the cooling water passage 38 to the width dimension W of the cooling water passage 38 as viewed in the central axial line O-O direction of the electrode is set to 0.11 to 0.21. This setting makes it possible to secure the preferable turbulent flow over the entire region as described above and effectively cool the melting heat.

As described above, in the cooling water supplied to the water-cooled electrode, the water supplied from the water supply pump equipment reaches the electrode through the narrow and complicatedly bent water passage, and thus a shortage of the water pressure or the flow rate of the cooling water to the electrode may occurs.

When the above-described ratio of the depth dimension D1 to the width dimension W (D1/W) is less than 0.11, the depth of the cooling water passage 38 is too small. Thus, the cooling water from the inlet 40 collides with the outer peripheral face 21 to generate a turbulent flow, but since the dimension D1 is too small, a turbulent flow or a vortex flow does not spread to the entire region of the width W of the cooling water passage 38. In addition, when the dimension D1 decreases, the flow passage area of the cooling water passage 38 decreases, a shortage of the flow rate of the cooling water occurs, and the amount of heat taken away from the main-body side inner face 36 decreases, which causes insufficient cooling.

When D1/W exceeds 0.21, as illustrated in FIG. 4B1 and FIG. 4B2 as comparative examples, the depth D1 of the cooling water passage 38 is too large, the water force of the cooling water from the inlet 40 decreases, whereby the cooling water does not vigorously collide with the outer peripheral face 21. Thus, a turbulent flow or a vortex flow is not sufficiently formed. In particular, when viewed in a width W direction of the cooling water passage 38 as illustrated in FIG. 4B2, a stagnation region 42 in which the cooling water is still or hardly flows is formed, and the cooling utilizing the entire region of the width W is not performed.

In addition, when viewed in the depth D1 direction as illustrated in FIG. 4B1, a weak incoming flow in which the water pressure or the flow rate decreases forms a separated flow 43 away from the outer peripheral face 21, or does not come into contact with the main-body side inner face 36 in a state of turbulent flow. As a result, a stagnation region 44 similar to the above-described stagnation region 42 is formed in the circumferential direction. Therefore, the cooling water flow becomes weak, and the amount of heat taken away from the main-body side inner face 36 decreases.

Note that the above-described unfavorable flow behavior is caused by the configuration illustrated in FIG. 3B.

Next, the heat insulating portion will be described.

The heat flow in which the melting heat during welding is transferred to the permanent magnet 15 is mainly transferred from the end cover 10 toward the welding-side member 7, transferred to the heat insulating portion 39 through the high-temperature cooling water, and reaches the permanent magnet 15 from the container 14. In such a heat flow path, it is advantageous to combine cooling by the cooling water described above and heat insulation in the heat insulating portion 39. The depth dimension D1 of the cooling water passage 38 as viewed in the diameter direction of the main body 6 is set to be smaller than the thickness dimension T1 of the heat insulating portion 39. Therefore, heat conduction is suppressed by the thick heat insulating portion 39, and overheating of the permanent magnet 15 is avoided. At the same time, by setting the dimensional relationship of T1 > D1, the following two functions can be performed: securing the above-described favorable cooling water flow by setting the depth dimension D1 to be small; and suppressing heat conduction in the heat insulating portion 39. Therefore, this thickness relationship is suitable for preventing demagnetization of the permanent magnet 15 and the like.

A ratio of the thickness dimension T1 of the heat insulating portion 39 to the depth dimension D1 of the cooling water passage 38 (T1/D1) is, according to the present invention, set to a value exceeding 1.40. If T1/D1 is less than 1.40, the thickness dimension T1 of the heat insulating portion 39 is insufficient, and there is a concern about temperature demagnetization of the permanent magnet 15 due to insufficient heat insulation. When T1/D1 exceeds 1.40, the thickness of the heat insulating portion 39 can be sufficiently secured, and the permanent magnet 15 can be maintained in a sound state. On the other hand, the diameter of the heat insulating guide sleeve 12 increases, and the outer diameter of the electrode 5 also increases, which is disadvantageous for arrangement in a narrow place. From such circumstances of the outer diameter, T1/D1 is, according to the present invention, up to 1.70.

By setting the above-described D1/W and the above-described T1/D1 within respective allowable ranges, even if the water supply circumstances from the water supply pump equipment deteriorates as described above, favorable cooling is achieved, and at the same time, heat transfer to the permanent magnet 15 is also favorably suppressed.

Next, other structure will be described.

In order to prevent leakage of cooling water, an O-ring 45 is disposed between the heat insulating guide sleeve 12 and the inner face of the welding-side member 7. As illustrated in FIG. 1, the O-ring 45 is fitted into a groove in the circumferential direction formed in the heat insulating guide sleeve 12. In addition, a groove 46 in the circumferential direction of the heat insulating guide sleeve 12 is filled with an adhesive agent to prevent electric leakage from at or near the conductive washer 23 in the event of cooling water leakage.

The stem 2 of the bolt 1 is inserted into the through hole 19, the electrode 5 advances in a state where the upper end of the stem 2 is attracted by the magnetic force transmission member 16, and the welding projection 4 is pressurized on a steel plate part (not illustrated) on the counterpart fixed electrode. In this way, the compression coil spring 24 is pushed and compressed, and the flange 3 is brought into close contact with the end cover 10. Due to this close contact, a current circuit for detection including the conductive wire 26, the conductive washer 23, the compression coil spring 24, the container 14, the magnetic force transmission member 16, the bolt 1, and the end cover 10 is formed. As a result, the detector 29 confirms that the bolt 1 positions normally, and thereafter, advance operation of the movable electrode starts.

Even if the electrode 5 advances without the bolt 1 being inserted into the through hole 19 and the end cover 10 is pressurized by the steel plate part, the current circuit for detection as described above is not formed. Accordingly, the detector 29 determines the absence of the bolt, and display of abnormality alarm or prohibition of the advancement of the electrode is performed.

Next, other structure of the cooling water passage will be described.

As illustrated in FIG. 5, machining of a groove shape is performed on the inner face side of the welding-side member 7 to form the cooling water passage 38 in the circumferential direction. The other structure is identical to that in FIG. 3A. The flow behavior of the cooling water and the suppression of heat transfer of the heat insulating portion 39 to the permanent magnet 15 are also identical to those in the case of FIG. 3A.

The operation and effects of the embodiment described above are as follows.

The melting heat generated by flowing the welding current is mainly transferred from the end cover 10 made of metal to the main body 6 made of metal. This melting heat is cooled by the cooling water flowing through the cooling water passage 38. In addition, the permanent magnet 15, the heat insulating portion 39 of the heat insulating guide sleeve 12, and the cooling water passage 38 are arranged in the diameter direction of the main body 6, and the depth dimension D1 of the cooling water passage 38 as viewed in the diameter direction of the main body 6 is set to be smaller than the thickness dimension T1 of the heat insulating portion 39. Therefore, the thickness dimension T1 of the heat insulating portion 39 can be increased as much as possible to reduce heat transfer from the heated cooling water to the permanent magnet 15, whereby abnormally high temperature of the permanent magnet 15 can be prevented.

Furthermore, the depth dimension D1 of the cooling water passage 38 can be made as small as possible. Thus, the water flow of the cooling water having entered from the inlet 40 reliably collide with the outer peripheral face 21 of the heat insulating guide sleeve 12 to diffuse, and flows in the circumferential direction in the state of a turbulent flow ranging over the entire region of the cooling water passage 38 to flow out to the outlet 41. Therefore, since the cooling water circulates while being in contact with the main-body side inner face 36 of the cooling water passage 38 in a state of turbulent flow, the melting heat can be effectively taken away from the main-body side inner face 36 of the cooling water passage 38 and the high cooling efficiency can be maintained.

In particular, there may be a case where a flow-rate or water-pressure shortage occurs at the supply destination in the distribution of the cooling water to each section of the factory as described above. Even in such a case, since the depth dimension D1 of the cooling water passage 38 as viewed in the diameter direction of the main body 6 is set to be smaller than the thickness dimension T1 of the heat insulating portion 39, the cooling water having entered the cooling water passage 38 from the inlet 40 immediately collides with the cylindrical face of the heat insulating portion 39 to diffuse before the flow force decreases. Then, the diffused cooling water forms a turbulent flow such as a small vortex flow ranging over the entire region of the cooling water passage 38, so that the melting heat can be effectively taken away from the inner face of the main body 6. That is, even if a factory has a risk of a shortage of water distribution, insufficient cooling of the electrode 5 is resolved by setting the depth dimension D1 of the cooling water passage 38 as described above.

Since the depth dimension D1 of the cooling water passage 38 as viewed in the diameter direction of the main body 6 is set to be smaller than the thickness dimension T1 of the heat insulating portion 39, the thickness of the heat insulating portion 39 can be increased. Accordingly, the heat transfer from the high-temperature cooling water to the permanent magnet 15 is blocked by the thick heat insulating portion 39, whereby the degree of heating of the permanent magnet 15 is moderated. As a result, the problem that the temperature demagnetization occurs in the permanent magnet 15 and the attractive force to the bolt 1 decreases is resolved. When the permanent magnet 15 is heated to an abnormally high temperature, irreversible demagnetization in which a decrease in magnetic force is not recovered even when the temperature returns to ordinary temperature, or in a significant case, the permanent magnet 15 reaches the Curie temperature and is brought into a demagnetized state. However, abnormal heating of the permanent magnet 15 is prevented by the heat insulating action of the heat insulating portion 39, which is effective for improving the durability of the permanent magnet 15. It is considered that when the permanent magnet 15 reaches the Curie temperature, heat from the main body 6 is transferred to the permanent magnet 15 without passing through the cooling water passage 38.

In other words, the cooling water forms a turbulent flow and actively cools the main body 6, and accordingly, the cooling water shifts to a high-temperature state and the heat flow to the permanent magnet 15 increases. However, since the thickness of the heat insulating portion 39 can be set to be large, abnormal heating of the permanent magnet 15 is prevented.

Since the magnetic force transmission member 16 extending from the container 14 is slidably inserted into the minor diameter hole 18, the attractive force to the bolt 1 decreases on the way in which the lines of magnetic force of the permanent magnet 15 pass through the magnetic force transmission member 16. If, before such a decrease in attractive force, the attractive force is decreased due to the temperature demagnetization phenomenon, the attraction holding force to the bolt 1 is significantly decreased. In the present embodiment, since heating of the permanent magnet 15 is suppressed by the heat insulating portion 39, there is no concern about the attraction holding force as described above.

Due to the cooling phenomenon as described above, an abnormally high temperature of the permanent magnet 15 can also be prevented. Usually, various magnets such as a ferrite magnet, a neodymium magnet, a samarium-cobalt magnet, and an alnico magnet are employed as the permanent magnet 15, but a magnet with less thermal demagnetization is desirably used. Even in the case of a permanent magnet having an attractive force of 100% at an outside air temperature of 20°C, the attractive force reduction varies depending on the type of magnet. When the permanent magnet is heated by melting heat to 50°C, the attractive force is reduced by 10%, and when the permanent magnet is heated to 100°C, the attractive force is reduced by 20%. Such temperature demagnetization occurring in the permanent magnet 15 itself greatly affects the attraction holding force to the bolt 1 because the attractive force attenuation on the way of the transmission of the attractive force in the magnetic force transmission member 16 is taken into consideration. In an extreme case, there is a concern about a problem of fall of the bolt 1. In the present embodiment, abnormal overheating of the permanent magnet 15 is suppressed, and thus the above problem is resolved.

The relationship of the depth dimension D1 of the cooling water passage 38 with respect to the width dimension W of the cooling water passage 38 as viewed in the central axial line O-O direction of the electrode 5 is set to a predetermined value. Thus, the water flow of the cooling water having entered from the inlet 40 can collide with the outer peripheral face 21 of the heat insulating guide sleeve 12 to diffuse, and can flow in the circumferential direction in the state of a turbulent flow like a small vortex flow ranging over the entire region of the cooling water passage 38 to flow out to the outlet 41. That is, the ratio of the depth dimension D1 of the cooling water passage 38 to the width dimension W of the cooling water passage 38 as viewed in the central axial line O-O direction of the electrode 5 (D1/W) is set to 0.11 to 0.21, making it possible to secure the preferable turbulent flow over the entire region as described above and effectively cool the melting heat. By maintaining such the ratio D1/W, the cooling water collides with the outer peripheral face 21 of the heat insulating portion 39 to form a diffused flow before the water force from the inlet 40 decreases, and a vortex flow or a turbulent flow ranging over the entire region of the cooling water passage 38 is secured, thereby achieving favorable cooling.

The ratio of the depth dimension of the cooling water passage to the width dimension of the cooling water passage as viewed in the central axial line direction of the electrode is set such that the water flow of the cooling water having entered from the inlet can collide with the outer peripheral face of the heat insulating guide sleeve to diffuse, and can flow in the circumferential direction in the state of a turbulent flow ranging over the entire region of the cooling water passage to flow out to the outlet.

The depth dimension D1 of the cooling water passage 38 as viewed in the diameter direction of the main body 6 is set to be smaller than the thickness dimension T1 of the heat insulating portion 39. In addition, the depth dimension D1 of the cooling water passage 38 with respect to the width dimension W of the cooling water passage 38 as viewed in the central axial line O-O direction of the electrode 5 is set such that the water flow of the cooling water having entered from the inlet 40 can collide with the outer peripheral face 21 of the heat insulating guide sleeve 12 to diffuse, and can flow in the circumferential direction in the state of a turbulent flow ranging over the entire region of the cooling water passage 38 to flow out to the outlet 41. Therefore, the main-body side inner face 36 of the cooling water passage 38 is actively cooled by the cooling water in the state of a turbulent flow, and at the same time, the heating of the permanent magnet 15 by the high-temperature cooling water is suppressed by the thick heat insulating portion 39.

### INDUSTRIAL APPLICABILITY

As described above, according to the electrode of the present invention, problems such as insufficient cooling and abnormal overheating of a permanent magnet are resolved by improving an electrode even when a decrease in pressure or a decrease in flow rate occurs in water supplied from water supply pump equipment. Therefore, the electrode in the present invention can be widely used in industrial fields such as welding processes of an automotive vehicle body and of sheet metal of a household electrical appliance.

### REFERENCE SIGNS LIST

- 1: Projection bolt
- 2: Stem
- 3: Flange
- 4: Welding projection
- 5: Electrode
- 6: Main body
- 7: Welding-side member
- 8: Fixed-side member
- 10: End cover
- 12: Heat insulating guide sleeve
- 14: Container
- 15: Permanent magnet
- 16: Magnetic force transmission member
- 17: Major diameter hole
- 18: Minor diameter hole
- 19: Through hole
- 21: Outer peripheral face
- 36: Main-body side inner face
- 37: Annular groove
- 38: Cooling water passage
- 39: Heat insulating portion
- 40: Inlet
- 41: Outlet
- O-O: Central axial line

## Claims

1. A magnet-equipped projection welding electrode (5), the electrode (5) comprising:
a main body (6) made of metal and having a cylindrical shape;
an end cover (10) made of metal, the end cover (10) attached to an end of the main body (6), the end cover (10) having a through hole (19) into which a part is inserted;
a heat insulating guide sleeve (12) made of an insulation material, the heat insulating guide sleeve (12) being inserted into the main body (6) and having a minor diameter hole (18) and a major diameter hole (17), the minor diameter hole (18) communicating with the through hole (19) of the end cover (10), the major diameter hole (17) having a diameter larger than a diameter of the minor diameter hole (18);
a cooling water passage (38) formed in an outer peripheral portion of the heat insulating guide sleeve (12) or an inner peripheral portion of the main body (6), the cooling water passage (38) having an annular shape and disposed in a circumferential direction of the main body (6);
an inlet (40) and an outlet (41) formed in the main body (6), the inlet (40) configured to supply cooling water to the cooling water passage (38), the outlet (41) configured to discharge the cooling water from the cooling water passage (38);
a heat insulating portion (39) being a portion of the heat insulating guide sleeve (12) that is located at an inner side of the cooling water passage (38);
a container (14) slidably inserted into the major diameter hole (17) located on an inner side of the heat insulating portion (39), the container (14) containing a permanent magnet (15); and
a magnetic force transmission member (16) extending from the container (14), the magnetic force transmission member (16) slidably inserted into the minor diameter hole (18),
wherein the permanent magnet (15), the heat insulating portion (39) of the heat insulating guide sleeve (12), and the cooling water passage (38) are disposed in a positional relationship in which the permanent magnet (15), the heat insulating portion (39) of the heat insulating guide tube, and the cooling water passage (38) are arranged in a diameter direction of the main body (6),
**characterized in that:**
a depth dimension (D1) of the cooling water passage (38) as viewed in the diameter direction of the main body (6) is set to be smaller than a thickness dimension (T1) of the heat insulating portion (39), wherein a ratio (T1/D1) of the thickness dimension (T1) to the depth dimension (D1) is set to 1.40 to 1.70.

2. The magnet-equipped projection welding electrode (5) according to claim 1, wherein
a ratio (D1/W) of the depth dimension (D1) to a width dimension (W) of the cooling water passage (38) as viewed in a central axial line (O-O) of the electrode (5) is set to 0.11 to 0.21.

## Patentansprüche

1. Eine Magnetbestückte Buckelschweißelektrode (5), wobei die Elektrode (5) Folgendes umfasst:
einen Hauptkörper (6), der aus Metall hergestellt ist und eine zylindrische Form hat;
eine Endabdeckung (10) aus Metall, wobei die Endabdeckung (10) an einem Ende des Hauptkörpers (6) befestigt ist und die Endabdeckung (10) ein Durchgangsloch (19) aufweist, in das ein Teil eingeführt wird;
eine wärmeisolierende Führungshülse (12), die aus einem Isoliermaterial hergestellt ist, wobei die wärmeisolierende Führungshülse (12) in den Hauptkörper (6) eingesetzt ist und ein Loch (18) mit kleinerem Durchmesser und ein Loch (17) mit größerem Durchmesser aufweist, wobei das Loch (18) mit kleinerem Durchmesser mit dem Durchgangsloch (19) der Endabdeckung (10) in Verbindung steht, wobei das Loch (17) mit größerem Durchmesser einen Durchmesser aufweist, der größer ist als ein Durchmesser des Lochs (18) mit kleinerem Durchmesser;
einen Kühlwasserkanal (38), der in einem äußeren Umfangsabschnitt der wärmeisolierenden Führungshülse (12) oder einem inneren Umfangsabschnitt des Hauptkörpers (6) ausgebildet ist, wobei der Kühlwasserkanal (38) eine ringförmige Form aufweist und in einer Umfangsrichtung des Hauptkörpers (6) angeordnet ist;
einen Einlass (40) und einen Auslass (41), die in dem Hauptkörper (6) ausgebildet sind, wobei der Einlass (40) konfiguriert ist, dem Kühlwasserkanal (38) Kühlwasser zuzuführen, und der Auslass (41) konfiguriert ist, das Kühlwasser aus dem Kühlwasserkanal (38) abzuleiten;
einen wärmeisolierenden Abschnitt (39), der ein Abschnitt der wärmeisolierenden Führungshülse (12) ist, der an einer Innenseite des Kühlwasserkanals (38) angeordnet ist;
einen Behälter (14), der gleitend in das Loch (17) mit dem größeren Durchmesser eingesetzt ist, das sich an einer Innenseite des wärmeisolierenden Abschnitts (39) befindet, wobei der Behälter (14) einen Permanentmagneten (15) enthält; und
ein magnetisches Kraftübertragungselement (16), das sich von dem Behälter (14) erstreckt, wobei das magnetische Kraftübertragungselement (16) gleitend in das Loch (18) mit kleinem Durchmesser eingesetzt ist,
wobei der Dauermagnet (15), der wärmeisolierende Abschnitt (39) der wärmeisolierenden Führungshülse (12) und der Kühlwasserkanal (38) in einer Positionsbeziehung angeordnet sind, in der der Dauermagnet (15), der wärmeisolierende Abschnitt (39) der wärmeisolierenden Führungshülse und der Kühlwasserkanal (38) in einer Durchmesserrichtung des Hauptkörpers (6) angeordnet sind,
**gekennzeichnet dadurch, dass:**
eine Tiefenabmessung (D1) des Kühlwasserkanals (38), gesehen in der Durchmesserrichtung des Hauptkörpers (6), so eingestellt ist, dass sie kleiner ist als eine Dickenabmessung (T1) des wärmeisolierenden Abschnitts (39), wobei ein Verhältnis (T1/D1) der Dickenabmessung (T1) zu der Tiefenabmessung (D1) auf 1,40 bis 1,70 eingestellt ist.

2. Die magnetbestückte Buckelschweißelektrode (5) gemäß Anspruch 1, wobei
ein Verhältnis (D1/W) der Tiefenabmessung (D1) zu einer Breitenabmessung (W) des Kühlwasserkanals (38), gesehen in einer zentralen axialen Linie (O-O) der Elektrode (5), auf 0,11 bis 0,21 eingestellt ist.

## Revendications

1. Électrode de soudage à projections équipée d'un aimant (5), l'électrode (5) comprenant :
un corps principal (6) constitué en métal et présentant une forme cylindrique ;
un recouvrement d'extrémité (10) en métal, le recouvrement d'extrémité (10) étant fixé à une extrémité du corps principal (6), le recouvrement d'extrémité (10) comportant un trou traversant (19) dans lequel une pièce est insérée ;
un manchon de guidage à isolation thermique (12) constitué d'un matériau isolant, le manchon de guidage à isolation thermique (12) étant inséré dans le corps principal (6) et comportant un trou de petit diamètre (18) et un trou de grand diamètre (17), le trou de petit diamètre (18) communiquant avec le trou traversant (19) du recouvrement d'extrémité (10), le trou de grand diamètre (17) ayant un diamètre supérieur à celui du trou de petit diamètre (18) ;
un passage d'eau de refroidissement (38) formé dans une portion périphérique externe du manchon de guidage à isolation thermique (12) ou dans une portion périphérique interne du corps principal (6), le passage d'eau de refroidissement (38) présentant une forme annulaire et étant disposé dans une direction circonférentielle du corps principal (6) ;
une entrée (40) et une sortie (41) formées dans le corps principal (6), l'entrée (40) étant configurée pour fournir de l'eau de refroidissement au passage d'eau de refroidissement (38), la sortie (41) étant configurée pour évacuer l'eau de refroidissement du passage d'eau de refroidissement (38) ;
une portion d'isolation thermique (39), qui est une portion du manchon de guidage à isolation thermique (12) située sur un côté interne du passage d'eau de refroidissement (38) ;
un réceptacle (14) inséré de manière coulissante dans le trou de grand diamètre (17) situé sur un côté interne de la portion d'isolation thermique (39), le réceptacle (14) contenant un aimant permanent (15) ; et
un élément de transmission de force magnétique (16) qui s'étend à partir du réceptacle (14), l'élément de transmission de force magnétique (16) étant inséré de manière coulissante dans le trou de petit diamètre (18),
dans laquelle l'aimant permanent (15), la portion d'isolation thermique (39) du manchon de guidage à isolation thermique (12) et le passage d'eau de refroidissement (38) sont disposés dans une relation de position où l'aimant permanent (15), la portion d'isolation thermique (39) du manchon de guidage à isolation thermique et le passage d'eau de refroidissement (38) sont agencés selon une direction diamétrale du corps principal (6),
**caractérisée en ce que :**
une dimension de profondeur (D1) du passage d'eau de refroidissement (38) vu dans la direction diamétrale du corps principal (6) est définie pour être inférieure à une dimension d'épaisseur (T1) de la portion d'isolation thermique (39), dans laquelle le rapport (T1/D1) de la dimension d'épaisseur (T1) par la dimension de profondeur (D1) est défini entre 1,40 et 1,70.

2. Électrode de soudage à projections équipée d'un aimant (5) selon la revendication 1, dans laquelle
le rapport (D1/W) de la dimension de profondeur (D1) par une dimension de largeur (W) du passage d'eau de refroidissement (38) vu selon une ligne axiale centrale (0-0) de l'électrode (5) est réglé entre 0,11 et 0,21.
